Europäisches Patentamt

European Patent Office

Office européen des brevets

(11) Publication number : **0 536 982 A2**

# (12) EUROPEAN PATENT APPLICATION

(21) Application number : 92309105.2

(22) Date of filing : 06.10.92

(51) Int. Cl.$^5$ : **A23P 1/08**, A23L 1/325, A23L 1/16

(30) Priority : 09.10.91 GB 9121393

(43) Date of publication of application :
14.04.93 Bulletin 93/15

(84) Designated Contracting States :
AT BE CH DE DK ES FR GB GR IT LI NL PT SE

(71) Applicant : UNILEVER PLC
Unilever House Blackfriars
London EC4P 4BQ (GB)
(84) GB

(71) Applicant : UNILEVER N.V.
Weena 455
NL-3013 AL Rotterdam (NL)
(84) BE CH DE DK ES FR GR IT LI NL PT SE AT

(72) Inventor : Scott, Glenda Lesley, Unilever
Research
Colworth Laboratory, Colworth House
Sharnbrook, Bedfordshire MK44 1LQ (GB)
Inventor : Wise, Kirsty Jane, Unilever
Research
Colworth Laboratory, Colworth House
Sharnbrook, Bedfordshire MK44 1LQ (GB)

(74) Representative : Roscoe, Brian Corrie et al
UNILEVER PLC Patents Division Colworth
House Sharnbrook
Bedford MK44 1LQ (GB)

(54) Filled tubular pieces for coating foodstuffs.

(57) A new coating material for foodstuffs comprising a filled tubular ingestible material which may have various different cross-sectional areas perpendicular to its main axis. Also a coating process and coated foodstuff using the coated material are claimed.

EP 0 536 982 A2

Jouve, 18, rue Saint-Denis, 75001 PARIS

The present invention relates to a novel coating material for foodstuffs, to a foodstuff which is at least partially provided with this coating material and to a process of coating foodstuffs, using the novel coating material according to the present invention.

Coating materials for foodstuffs, contributing to their taste and appearance, like battered and crumbed products are well known. Sometimes the coating material also serves to impart barrier properties, so as to prevent the migration of moisture/or flavouring materials out of the coated foodstuff, leading to a deterioration of the organoleptic properties of the foodstuff.

It is an object of the present invention to provide a novel type of coating material for foodstuffs, which not only imparts a specific appearance to the foodstuff coated with this novel coating material, such as specifically contrasting flavours and an unexpected eating sensation. This object is reached by the provision of a novel coating material for foodstuffs in tubular form, made from an ingestible material, which hollow tubular material is filled with, preferably, a different, ingestible material.

The present invention therefore relates to a coating material for foodstuffs, which is characterised in that it consists of filled, tubular ingestible material.

The present invention also relates to a foodstuff which is characterised in that it is at least partially provided with a coating material according to the present invention.

Finally, the present invention relates to a process of coating foodstuffs, which is characterised in that a foodstuff is at least partially provided with a coating material according to the present invention.

The tubular ingestible material may be a straight or curved tubular material having a relatively constant wall thickness over its entire length, but it may also be a corrugated tube having a constant or varying wall thickness. The outer surface may also be provided with grooves in spiral fashion or in length direction.

The tubular material may have a cross-sectional area perpendicular to its main axis of which the form is selected from the group consisting of triangular, square, rectangular, circular, ellipsoid, polygonal and multifaceted. Preferably, this cross-sectional area is circular.

The tubular material may be mono-chromatic or it may be poly-chromatic, in which latter case the differently coloured areas may be different in size, varying from speckles to much larger areas. Such a colour pattern may be regular or irregular.

On its outside, the tubular material may also have a coating of fine or coarse, particulate, ingestible material which may also be polychromatic, leading to specific optical effects.

Finally, the tubular material is preferably open at the ends, but it may also be closed at least at one end.

The ingestible material of which the tubular coating material is prepared, is based on starch or flour in the form of a dough, preferably a pasta dough, which is based on one or more of semolina, farina or flour and water, but which may also contain other types of starches or flours, such as different flours, gums, and the like material.

The tubular coating material may also comprise vegetable protein, like soybean protein; animal proteins, like meat and milk protein; fungal proteins, like mycoprotein; caseinate, like alkali metal caseinate; vegetables, like red peppers, parsley, onion and carrot, which at the same time may impart a certain colour to the tubular material; stabilisers, like gums; dairy products, like cheese material; egg material, like egg yolk; fruit; herbs; spices, like garlic; flavouring agents, particularly savory flavouring agents; flavouring precursors, which form flavours under the conditions of preparing the tubular coating material; emulsifiers, like lecithin and fatty acid monoglycerides; fats, which also may be fat fractions or fat substitutes; oils; colouring agents; anti-oxidants, preferably those prepared from spice extracts, like rosemary extract or tea material; fibre material, like pea flour; minerals, like phosphates and common salt; vitamins and mixtures of these materials.

The fat may be of vegetable or animal origin and may be synthetic fat. It may be a single fat or fat fraction or a mixture of fats and/or fat fractions. At least part of the fat may be replaced by a low-calorie fat replacer. Particularly suitable fat replacers are the edible polyesters of polyhydric alcohols having at least four free hydroxyl groups, such as polyglycerols, sugars, or sugar alcohols, and saturated or unsaturated, straight or branched alkyl chain $C_8$-$C_{24}$ fatty acids. The polyhydric alcohol fatty acid polyesters include any such polyesters or mixtures thereof of which, on an average, at least 70% of the polyhydric alcohol hydroxyl groups have been esterified with the fatty acids. Also fatty alkyl ether derivatives of glycerol esters of $C_8$-$C_{24}$ fatty alcohols and polycarboxylic acids, waxes and microcrystalline cellulose can be used for replacing at least part of the fat.

The filling material which is provided in the tubular coating material is selected from the meat of mammals, fish and poultry, which is preferably comminuted and which may have been subjected to pre-treatments, such as smoking, marinading, and the like; vegetable proteins, like soybean protein; fungal proteins, like mycoprotein; animal proteins, like milk protein; vegetables, like red peppers, carrot and cabbage; dairy products, like cheese and yoghurt; egg material; fruits, herbs and spices; dressings, like ketchups, sauces, mayonnaise, and the like; and mixtures thereof.

Additionally the filling material may comprise flavouring agents, particularly savory flavouring agents; emulsifiers, like fatty acid lactylates, lecithin and the like; stabilisers, like gums; caseinates, like alkali metal caseinates; flavouring precursors, which form flavours under the conditions of preparing the coating material; fats and oils and fat substitutes, which may be the same as or different from those in the tubular material; colouring agents; anti-oxidants; fibres, like pea flour; minerals; vitamins and mixtures thereof.

Preferably, the filled tubular coating material according to the present invention is made by coextrusion, in which a first ingestible material forming the wall material of the tubular coating material is coextruded around a second ingestible material, forming the filling material of the tubular coating material. Preferably, the consistency and texture of both ingestible materials are adjusted so as to enable co-extrusion.

In another process of preparing the filled tubular coating material according to the present invention, the filling material is first converted into solid form by heating, freezing or gel-forming techniques, after which the solidified filling material is wrapped in dough.

The present invention also relates to a foodstuff which is at least partially provided with a coating material according to the present invention. Examples of foodstuffs which can be coated with the coating material according to the present invention are pieces of fish, meat or poultry, small meals in rectangular or cylindrical form, croquettes, ethnic foods, and the like.

The foodstuff may be coated with a homogeneous filled tubular coating material, but also mixtures of filled tubular coating materials according to the present invention may be used, having different flavours and/or colours and/or shapes or forms and/or sizes. In this way, very specific combinations of flavours may be obtained and a whole range of products with new combinations of visual and organoleptic properties can be provided by means of the present invention.

The filled tubular coating material may be adhered to the foodstuff to be coated by means of an edible glue material, such as egg-based material, which is applied onto the foodstuff and/or the tubular coating material. A conventional batter or materials based on ground meat may also be used. The foodstuff may also be breaded.

The present invention also relates to a process of coating a foodstuff, which is characterised in that the foodstuff is at least partially provided with the coating material according to the present invention.

Such a coating process may be effected by tumbling the foodstuff pieces, which previously may have been provided with an ingestible glue material, in an amount of the tubular coating material according to the present invention. The coating process may also be effected by coating the foodstuff pieces in a fluidised bed of the filled tubular coating material according to the present invention.

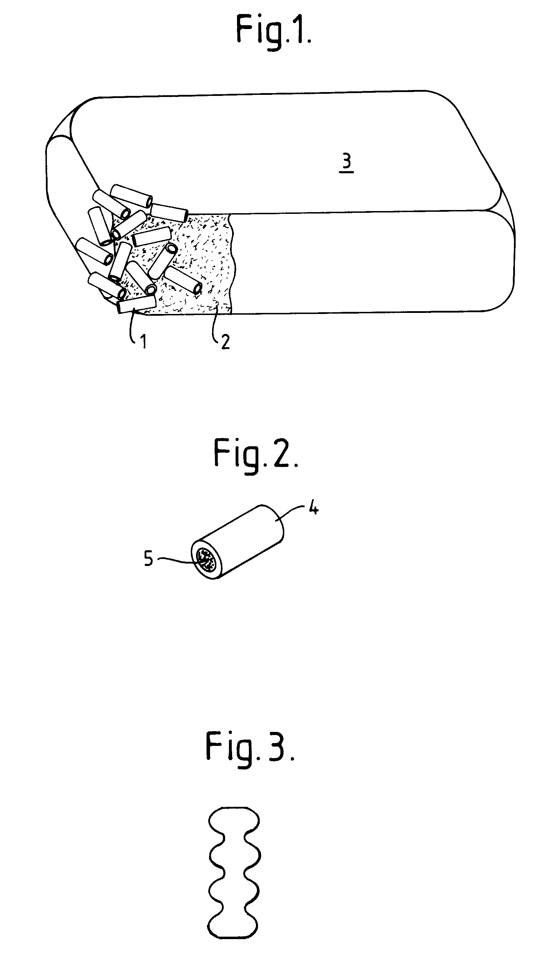

A coated food product prepared according to the present invention is illustrated in Figure 1, in which 1 is a filled tubular coating material according to the present invention, which has separately been depicted in Figure 2, and 2 is an area of the food product 3 onto which an edible glue material has been applied. In Figure 2 the tubular material, used to coat the piece of foodstuff 3 has separately been depicted. A tubular material 4 is filled with an ingestible material filling 5. In Figure 3 a side view has been given of a corrugated filled tubular coating material according to the present invention.

The invention will now be illustrated by the following examples:

EXAMPLE 1

A commercial type of macaroni was boiled for 20 minutes in salted water according to the instructions indicated on the pack. After boiling, the macaroni was rinsed in cold water (10°C), drained and then fried in a deep fat fryer (sunflower seed oil) at 190°C for 45-60 seconds.

The fried, boiled macaroni tubes obtained were filled with a tomato-based sauce of the following composition, using a syringe:

|  | % by weight |
|---|---|
| Water | 19.5 |
| Vinegar | 15.0 |
| Tomato puree | 37.0 |
| Sugar | 20.0 |
| Seasoning | 3.5 |
| Starch | 4.5 |
| Thickening agent | 0.5 |

The filled macaroni tubes were subsequently cut into pieces having a length of about 5 mm.

Standard fish fingers were battered with a batter of the following composition: 600 grams of wheat flour, 200 grams of raw farina, 40 grams of salt and 1040 grams of water. The battered fish fingers were subsequently coated with the small pieces of filled macaroni tube as prepared above. The battered and coated fish fingers were then fried in a deep fat fryer at 190°C for 45 seconds. The samples were then blast-frozen at -40°C. After thawing and reheating for consumption, a very tasty type of fish fingers was obtained, having a pleasant appearance.

EXAMPLE 2

A commercial type of macaroni was boiled for 20 minutes in 1 litre of salted water to which 10 grams of a yellow edible colouring agent were added to colour the macaroni tubes yellow. The macaroni was further prepared as described in Example 1, except that for the filling there was now used a commercially available liver pate. In the same way as described in Example 1, fish fingers were coated with this yellow-coloured, liver pate-filled macaroni.

A typically coloured fish finger product was obtained which upon consumption had a very pleasant taste contrast.

EXAMPLE 3

In the same way as described in Example 1, a brown whole wheat type of macaroni was boiled for 8-10 minutes in salted water and further prepared as described in Example 1, but using as the filling material, the same liver pate as used in Example 2.

The filled brown macaroni obtained was mixed in a weight of 1:1 with the yellow filled macaroni as prepared in Example 2 and this mixture of two differently coloured types of macaroni was used as a coating material for the fish fingers as described in Example 1.

Coated fish fingers with a nice looking twin-coloured coating were obtained, having a surprising and pleasant taste contrast upon consumption.

EXAMPLE 4

Example 1 was repeated, but now using a garlic-flavoured 'Boursin' cheese (Trademark) as the filling material for the macaroni. A coated fish finger product was obtained, having a very specific taste effect.

EXAMPLE 5

Example 1 was repeated, but now using a commercially available soft cheese-like dressing on the basis of cream, red and green peppers, onion, tomato concentrate, salt, cayenne pepper, coriander, cumin and spices. A coated fish finger product was obtained which looked very attractive and had a very specific taste contrast upon consumption.

EXAMPLE 6

A commercial type of so-called thinly cut macaroni was boiled in salted water for 7-8 minutes according to the instructions on the pack. After boiling, the macaroni was further treated as described in Example 1, except that for the filling material the garlic-flavoured 'Boursin' cheese (Trademark) from Example 4 was used. The filled, thinly cut macaroni was mixed with the normal macaroni as obtained in Example 4 in a weight ratio of 1:1. This mixture was used as a coating material for the fish fingers as described in Example 1.

Finally, fish fingers were obtained which had a coating of different sizes of macaroni and which had a very specific, but very pleasant taste contrast upon consumption.

These examples show that with the present invention a whole range of new coating materials have become available which, upon application to edible products, yield a range of new products having surprisingly organoleptic properties.

**Claims**

1.  A coating material for foodstuffs, characterised in that it consists of filled, tubular ingestible material.

2.  A coating material for foodstuffs according to claim 1, wherein the filling and the tubular material are different.

3.  A coating material according to claims 1 and 2, wherein the tubular ingestible material is based on a starch or flour based dough.

4.  A coating material according to any preceding claim, wherein the tubular ingestible material is based on a pasta dough.

5.  A coating material according to any preceding claim, wherein the tubular material additionally comprises a material selected from vegetable proteins, animal proteins, fungal proteins, caseinate, vegetables, stabilisers, dairy products, egg material, fruits, herbs, spices, flavouring agents, emulsifiers, flavouring precursors, fats, oils, fat substitutes, colouring agents, anti-oxidants, fibres, minerals, vitamins, and mixtures thereof.

6.  A coating material according to any preceding claim, wherein the filling material is selected from meat from mammals, fish and poultry, carbohydrates, vegetable proteins, fungal proteins, vegetables, dairy products, egg material, fruits, herbs, spices, dressings, sauces, ketchup, mayonnaise, and mixtures thereof.

7.  A coating material according to any preceding claim, wherein the cross-sectional area perpendicular to the main axis of the tubular material is selected from triangular, square, rectangular, circular, ellipsoid, polygonal and multi-facetted.

8.  A coating material according to any preceding claim, wherein the tubular material is a corrugated tube.

9.  A coating material according to any preceding claim, wherein the tubular material is polychromatic or speckled.

10. A coating material according to any preceding claim, wherein the outer surface area of the tubular material is provided with grooves in longitudinal direction or spiral fashion.

11. A coating material according to any preceding claim, wherein its outside is at least partially coated with a particulate, ingestible material.

12. A coating material according to claim 11, wherein the particulate, ingestible material is polychromatic.

13. A foodstuff, at least partially provided with a coating material as claimed in any one of claims 1 to 12.

14. A process of coating a foodstuff, characterised in that a foodstuff is at least partially provided with a coating material as claimed in any one of claims 1 to 12.

15. A process of coating a foodstuff, characterised in that a foodstuff is at least partially provided with a mixture of coating materials as claimed in any one of claims 1 to 12 having different flavours and/or colours and/or shapes or forms and/ or sizes.

# Fig.1.

# Fig.2.

# Fig.3.